# DEMANDE DE BREVET EUROPEEN

(11) **EP 1 106 901 A1**
(43) Date de publication de la demande: **13.06.2001**
(21) Numéro de dépôt: 00403259.5
(22) Date de dépôt: 22.11.2000
(51) Int. Cl.: F16L 57/00, B65D 59/06, F16L 55/115

(54) **Obturateur amovible pour canalisation métallique destinée à être raccordée à une canalisation flexible**

(30) Priorité: 30.11.1999 FR 9915049
(71) Demandeur: TI GROUP AUTOMOTIVE SYSTEMS, 37530 Nazelles Negron (FR)
(72) Inventeur: Tarte, Frédéric, 37150 La Croix en Touraine (FR)
(74) Mandataire: Jaunez, Xavier

(57) **Abrégé**

La présente invention concerne un obturateur amovible (100) associé à une vis-raccord (6) d'une canalisation métallique (1), destinée à se visser dans un raccord femelle prévu en extrémité d'une canalisation flexible, en traversant une patte de fixation solidaire d'une structure de support. Conformément à l'invention, l'obturateur amovible (100) est essentiellement constitué par un corps tubulaire (101) fermé destiné à être monté sur la partie filetée (8) de la vis-raccord (6), et par un anneau séparable (102) relié au corps tubulaire (101) par au moins un ligament frangible (103) au niveau de l'ouverture dudit corps, l'anneau (102) ayant un diamètre intérieur inférieur au diamètre extérieur de la partie filetée afin de constituer un organe de retenue, une fois l'obturateur mis en place, pour un cavalier (12) d'arrêt en translation enfilé sur la vis-raccord (6), ledit anneau restant en place sur la vis-raccord après enlèvement du corps tubulaire (101) et rupture du ou des ligaments frangibles (103).

## Description

La présente invention concerne le raccordement d'une canalisation métallique à une canalisation flexible au niveau d'un raccord traversant une patte de fixation solidaire d'une structure de support.

A titre particulier, sans que l'invention soit limitée à cette application, les canalisations concernées peuvent être des canalisations de freinage d'un véhicule automobile. Dans ce cas, la canalisation métallique cintrée doit être raccordée à une canalisation flexible, avec une liaison à une patte de fixation solidaire de la caisse du véhicule.

L'arrière-plan technologique peut être illustré par les documents DE-U-91 13 789, DE-A-34 33 206 et GB-A-1 568 880, qui illustrent l'obturation d'un embout de raccordement par un bouchon de protection amovible qui, une fois enlevé, reste solidaire de l'embout par une languette reliant le bouchon à une collerette montée prisonnière sur ledit embout.

Ces documents ne traitent pas du problème particulier auquel s'intéresse l'invention, qui est celui du raccordement entre deux canalisations au niveau d'un raccord traversant une patte de fixation solidaire d'une structure de support.

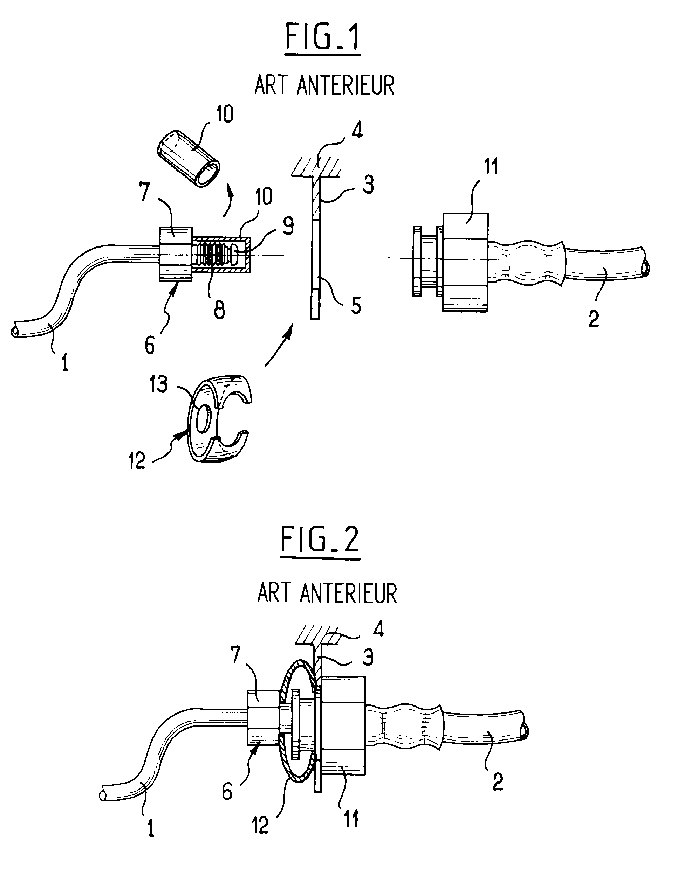

On va décrire ci-après l'état de la technique relatif à ce problème particulier en référence aux figures 1 et 2.

Sur la figure 1 on distingue une canalisation métallique 1 se terminant par un embout mâle 9 à tête tronconique contre lequel vient en butée une vis-raccord 6 coulissant librement sur la canalisation métallique 1. La vis-raccord 6 présente une partie écrou 7 et une partie filetée 8, cette dernière étant destiné à se visser dans un filetage femelle d'un raccord 11 solidaire d'une canalisation flexible 2. Lorsque la partie filetée 8 de la vis-raccord 6 se visse à l'intérieur du raccord femelle 11, l'embout mâle 9 de la canalisation métallique 1 est écrasé contre une surface tronconique homologue interne au raccord femelle 11, ce qui réalise alors l'étanchéité du raccordement entre les deux canalisations 1,2. Pour la fixation de l'ensemble au niveau du raccordement entre les deux canalisations, il est prévu une patte de fixation 3 solidaire d'une structure de support 4, en l'espèce la structure du véhicule, ladite patte de fixation présentant une ouverture de passage à décrochement débouchant 5.

La partie filetée 8 de la vis-raccord 6 et l'embout mâle 9 saillant de l'extrémité libre de ladite vis-raccord sont encapuchonnés par un obturateur amovible 10 en matière plastique, qui est enfiché sur ladite partie filetée. Cet obturateur 10 est destiné à protéger la zone d'extrémité lors du transport de la canalisation métallique 1 jusqu'au site de montage. Lorsqu'il s'agit d'effectuer un raccordement entre les deux canalisations, un opérateur enlève à la main l'obturateur amovible 10 (comme schématisé sur la figure 1), découvrant ainsi la partie filetée 8 et l'embout mâle 9 de la canalisation 1. Ensuite il manipule l'ensemble ainsi préparé en insérant un cavalier d'arrêt en translation 12 par l'ouverture centrale 13 de celui-ci, puis il rapproche l'ensemble de la patte de fixation 3, en faisant traverser l'ouverture associée 5 par la partie filetée 8 de la vis-raccord 6. Il rapproche ensuite le raccord femelle 11, puis réalise le vissage en manipulant au moyen d'une clef adéquate la partie écrou 7 de la vis-raccord 6. La situation finale est illustrée sur la figure 2, et le raccordement est en place, avec l'étanchéité requise pour le fluide traversant les canalisations 1 et 2, et avec un maintien mécanique en place solide et fiable grâce à la patte de fixation 3.

Cette technique actuelle présente cependant plusieurs inconvénients, dont le principal réside dans la pluralité des manipulations qui sont nécessaires pour arriver jusqu'à la situation finale de montage. En effet, il faut d'abord enlever l'obturateur 10, puis enfiler le cavalier 12 sur la vis-raccord 6, et ensuite effectuer un pré-vissage à la main pour amener l'embout mâle conique en contact avec le fond du raccord femelle, après quoi l'opérateur peut enfin utiliser une visseuse automatique pour effectuer le serrage final. En outre, ceci suppose d'organiser une réserve de cavaliers sur le site de montage, ce qui constitue un inconvénient supplémentaire.

La présente invention vise à rationaliser cette technique de montage grâce à une nouvelle conception de l'obturateur amovible.

L'invention concerne ainsi un obturateur amovible qui est associé à une vis-raccord passant librement autour d'un embout mâle prévu en extrémité d'une canalisation métallique, et destinée à se visser dans un raccord femelle prévu en extrémité d'une canalisation flexible en traversant une patte de fixation solidaire d'une structure de support, avec interposition d'un cavalier d'arrêt en translation entre la partie écrou de la vis-raccord et la patte de fixation.

Conformément à l'invention, l'obturateur amovible du type précité est essentiellement constitué par un corps tubulaire fermé destiné à être monté sur la partie filetée de la vis-raccord, et par un anneau séparable relié au corps tubulaire par au moins un ligament frangible au niveau de l'ouverture dudit corps, ledit anneau ayant un diamètre intérieur inférieur au diamètre extérieur de ladite partie filetée afin de constituer un organe de retenue, une fois ledit obturateur mis en place, pour un cavalier d'arrêt en translation enfilé sur la vis-raccord, ledit anneau restant en place sur la vis-raccord après enlèvement du corps tubulaire et rupture du ou des ligaments frangibles.

Ainsi grâce à la conception originale de l'obturateur amovible précité, on réalise un ensemble unitaire associé à la canalisation métallique cintrée, qui comporte, en plus de la vis-raccord habituelle, le cavalier d'arrêt en translation qui ne rentre en fonction que lors de la fixation définitive du raccordement. Sur le site de montage, il suffit alors à l'opérateur de retirer le corps tubulaire de l'obturateur amovible, ce retrait ayant pour effet de briser le ou les ligaments frangibles, en laissant sur place l'anneau séparable qui joue alors pleinement sa fonction d'organe de retenue pour le cavalier d'arrêt en translation.

De préférence, le corps tubulaire et son anneau séparable sont enfichables coaxialement sur la partie filetée de la vis-raccord, et le ou les ligaments frangibles de liaison sont conçus pour se rompre sous un effort axial très inférieur à l'effort d'arrachement de l'anneau retenant le cavalier sur ladite vis-raccord. En particulier, on pourra prévoir que le corps tubulaire peut être enlevé à la main en exerçant un effort axial limité compris entre 10 et 20 newtons, tandis que l'anneau séparable résiste à un effort axial d'arrachement d'au moins 50 newtons. L'éloignement de ces deux zones d'efforts d'arrachement garantit à la fois l'enlèvement facile, à la main, du corps tubulaire, avec la rupture du ou des ligaments frangibles, et le maintien en place fiable du cavalier d'arrêt en translation sur la vis-raccord.

On pourra prévoir que le ligament frangible raccordant l'anneau séparable au corps tubulaire est unique, et que ledit corps tubulaire présente, au niveau de son ouverture, un bourrelet d'étanchéité se raccordant à une jupe cylindrique d'extrémité à laquelle est lié ledit ligament frangible. Ce bourrelet forme en particulier une barrière anti-impuretés.

De préférence encore, le corps tubulaire présente une longueur suffisante pour que son extrémité de préhension dépasse largement de la patte de fixation après traversée de celle-ci, de façon à permettre un enfichage de l'obturateur à travers ladite patte de fixation avant l'enlèvement dudit obturateur. Ainsi, contrairement à la technique antérieure mentionnée ci-dessus, l'opérateur fait pénétrer l'extrémité libre de l'obturateur amovible dans l'ouverture de la patte de fixation, puis alors seulement on réalise l'enlèvement du corps tubulaire de l'obturateur, juste avant d'effectuer la liaison de la vis-raccord et du raccord femelle par vissage. Ceci est très avantageux dans la pratique, dans la mesure où les canalisations métalliques cintrées sont délicates à manipuler, ainsi que cela est fréquemment le cas pour les véhicules automobiles.

On pourra alors prévoir que le corps tubulaire présente, au-delà de son fond, une extrémité de préhension de section cruciforme se terminant par un disque transversal.

On pourra en variante prévoir que le corps tubulaire présente une paroi intermédiaire servant de butée d'appui pour l'embout mâle de la canalisation métallique, l'extrémité de préhension étant tubulaire et s'étendant au-delà de ladite paroi intermédiaire.

Conformément à une autre caractéristique avantageuse, l'anneau séparable présente un profil interne à décrochement, avec un diamètre plus faible du côté du corps tubulaire. Ceci permet d'avoir un anti-retour très fiable de l'anneau séparable après mise en place de celui-ci, à la façon d'un encliquetage.

De préférence encore, l'anneau séparable présente une facette extérieure tronconique inclinée vers l'arrière pour limiter le frottement par contact avec le cavalier une fois ledit obturateur mis en place. En particulier, la facette extérieure de l'anneau séparable peut être inclinée d'un angle de l'ordre de 30° par rapport au plan dudit anneau. On évite ainsi un contact plan sur plan qui pourrait induire un mouvement de rotation du cavalier lors du vissage de la vis-raccord.

De préférence enfin, le corps tubulaire et son anneau séparable forment un ensemble unitaire moulé.

D'autres caractéristiques et avantages de l'invention apparaîtront plus clairement à la lumière de la description qui va suivre, et des autres figures du dessin annexé, concernant un mode de réalisation particulier, où:
- la figure 3 illustre un obturateur amovible conforme à l'invention, associé à une vis-raccord, alors équipée d'un cavalier d'arrêt en translation, avant la réalisation du raccordement et le montage sur la patte de fixation;
- la figure 4 illustre l'ensemble précédent, avec l'enlèvement du corps tubulaire de l'obturateur laissant en place l'anneau séparable qui assure le maintien cavalier sur la vis-raccord ;
- les figures 5 à 7 sont des vues respectivement en perspective, en élévation et en coupe axiale (selon la ligne VII-VII de la figure 6, de l'obturateur amovible selon l'invention, dont l'anneau séparable est relié au corps tubulaire par un ligament frangible ici unique ;
- la figure 8 illustre les différentes étapes de mise en place de l'obturateur amovible précité sur la vis-raccord, jusqu'à l'enlèvement du corps tubulaire dudit obturateur laissant en place l'anneau séparable de maintien du cavalier ;
- la figure 9 est une vue en coupe à plus grande échelle permettant de mieux distinguer l'anneau séparable restant en place après le retrait du corps tubulaire de l'obturateur;
- la figure 10 est une demi-coupe illustrant, à plus grande échelle, la section de l'anneau séparable, dont le profil présente ici à la fois un décrochement intérieur et une facette inclinée,
- les figures 11 et 12 sont des vues respectivement en élévation et en coupe axiale (selon la ligne XII-XII de la figure 11) illustrant une variante de réalisation de l'obturateur, et la figure 13 illustre le détail XIII de la figure 12 à plus grande échelle.

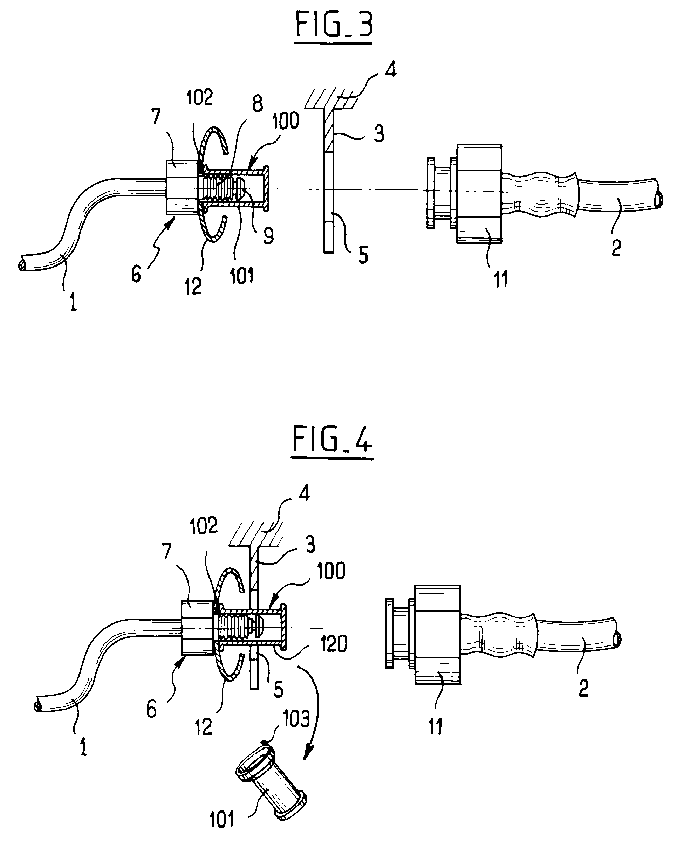

Sur la figure 3, on retrouve les éléments déjà décrits en référence aux figures 1 et 2, associés à la canalisation métallique cintrée 1 et à la canalisation flexible 2. Tous ces éléments ne seront donc pas décrits à nouveau et ce d'autant plus qu'ils ne font pas expressément partie de l'invention.

Sur la figure 3, on distingue un obturateur amovible 100 comportant un corps tubulaire 101 et un anneau séparable 102 relié audit corps par au moins un ligament frangible, tous deux enfilés sur la vis-raccord 6, c'est-à-dire plus précisément sur la partie filetée 8 de celle-ci. Dans cette situation, l'ensemble associé à la canalisation cintrée 1 est équipé du cavalier d'arrêt en translation 12 du type de celui illustré sur la figure 1.

Il suffit alors à l'opérateur de retirer le corps tubulaire 101 de l'obturateur amovible 100 afin de dégager la partie filetée 8 de la vis-raccord 6, en réalisant simultanément la rupture du ou des ligaments frangibles joignant le corps tubulaire 101 et l'anneau séparable associé 102, ce retrait laissant en place l'anneau (dont le diamètre intérieur est choisi notablement inférieur au diamètre extérieur de la partie filetée 8) qui sert alors d'organe de retenue pour le cavalier 12.

De préférence, comme cela est illustré sur la figure 4, le corps tubulaire 101 présente une longueur suffisante pour que son extrémité de préhension notée 120 dépasse largement de la patte de fixation 3, après traversée de celle-ci, de façon à permettre un enfichage de l'obturateur à travers ladite patte de fixation avant l'enlèvement dudit obturateur. Ainsi, il suffit à l'opérateur d'enficher dans l'ouverture 5 de la patte de fixation 3 l'extrémité de l'ensemble unitaire associé à la canalisation cintrée 1, puis de retirer à la main le corps tubulaire 101 de l'obturateur 100, et enfin de rapprocher le raccord femelle 11 pour effectuer la jonction désirée. La vis-raccord 6 étant déjà en place dans l'ouverture associée de la patte de fixation 3, l'opérateur peut directement utiliser des moyens automatique de vissage. On limite ainsi au maximum le nombre de manipulations et le temps d'intervention. Sur la figure 4, on aperçoit la trace du ligament 103, ici unique, qui joignait l'anneau séparable 102 au corps tubulaire 101. Comme on le verra, il est possible de prévoir une pluralité de tels ligaments frangibles.

Dans la pratique il sera intéressant de prévoir que le corps tubulaire 101 et son anneau séparable 102 sont enfichables coaxialement sur la partie filetée 8 de la vis-raccord 6, et que le ou les ligaments frangibles de liaison 103 sont conçus pour se rompre sous un effort axial très inférieur à l'effort d'arrachement de l'anneau 102 retenant le cavalier 12 sur ladite vis-raccord. En particulier, le corps tubulaire 101 pourra être enlevé à la main, en exerçant un effort axial limité compris entre 10 et 20 newtons, tandis que l'anneau séparable 102, une fois en place, résiste à un effort axial d'arrachement d'au moins 50 newtons.

La disparité de ces deux gammes d'efforts d'arrachement constitue une particularité essentielle de l'obturateur amovible selon l'invention, garantissant à la fois un enlèvement aisé du corps tubulaire de l'obturateur, en particulier à la main, et un maintien fiable du cavalier qui est en place sur la vis-raccord.

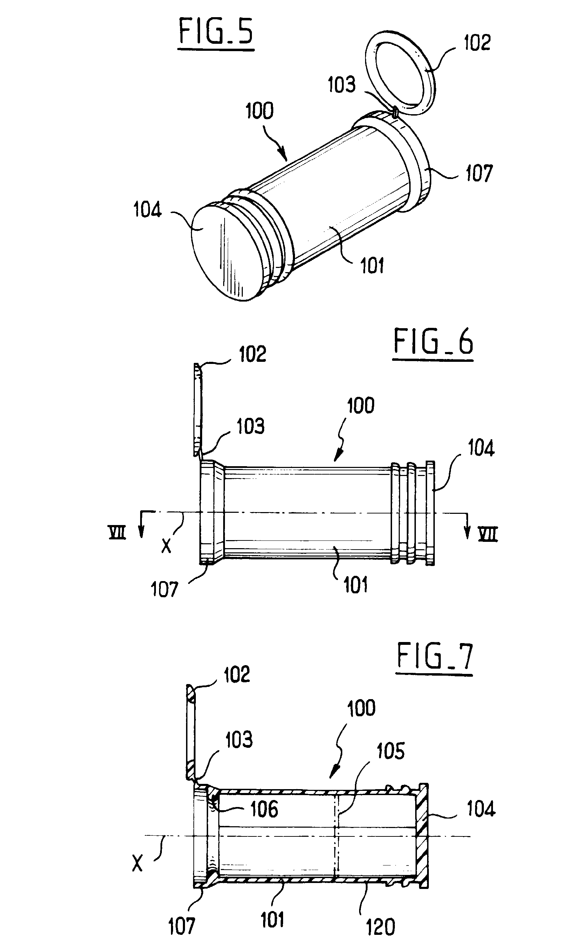

Les figures 5 à 7 permettent de mieux distinguer la structure de l'obturateur amovible 100, avec son corps tubulaire 101 et son anneau séparable 102 relié audit corps tubulaire par un ligament frangible ici unique 103. Sur la coupe de la figure 7, on constate que le corps tubulaire présente au niveau de son ouverture un bourrelet d'étanchéité 106 se raccordant à une jupe cylindrique d'extrémité 107 à laquelle est lié le ligament frangible 103 raccordant l'anneau séparable 102 audit corps tubulaire. Ce bourrelet 106 constitue une barrière efficace contre la pénétration des impuretés à l'intérieur dudit obturateur. On notera également sur la figure 7 la présence, sur la surface interne du corps tubulaire 101, de facettes inclinées (une seule des trois facettes est visible ici) qui permettent d'enficher directement l'obturateur amovible sur la partie filetée 8 de la vis-raccord 6, comme cela était le cas pour les obturateurs de l'art antérieur ne présentant pas d'anneau séparable.

Le fond du corps tubulaire noté 104 assure la fermeture de l'obturateur. Toutefois, comme on a prévu ici une longueur d'obturateur suffisante pour que l'on dispose d'une extrémité de préhension de l'autre côté de la patte de fixation, après mise en place de l'ensemble associé à la canalisation 1, on pourra prévoir que le corps tubulaire 101 présente une paroi intermédiaire 105, ici illustré en trait mixte, qui sert alors de butée d'appui pour l'embout mâle 9 de la canalisation métallique 1.

L'obturateur amovible illustré sur les figures 5 à 7 pourra être réalisé par moulage, auquel cas le corps tubulaire 101 et son anneau séparable 102 forment un ensemble unitaire moulé en matière plastique. L'ensemble pourra être moulé dans une position correspondant sensiblement à celle illustré aux figures 5 et 6, avec par exemple un plan de joint se situant au niveau du plan de sortie de la jupe cylindrique 107 et du plan extérieur de l'anneau séparable 102. On pourra en particulier prévoir un moulage groupé de plusieurs obturateurs amovibles, sous forme de grappes reliées par des mini-ligaments frangibles. L'ensemble des obturateurs moulés en une seul passe de moulage sera relié à une carotte commune au niveau du fond des obturateurs.

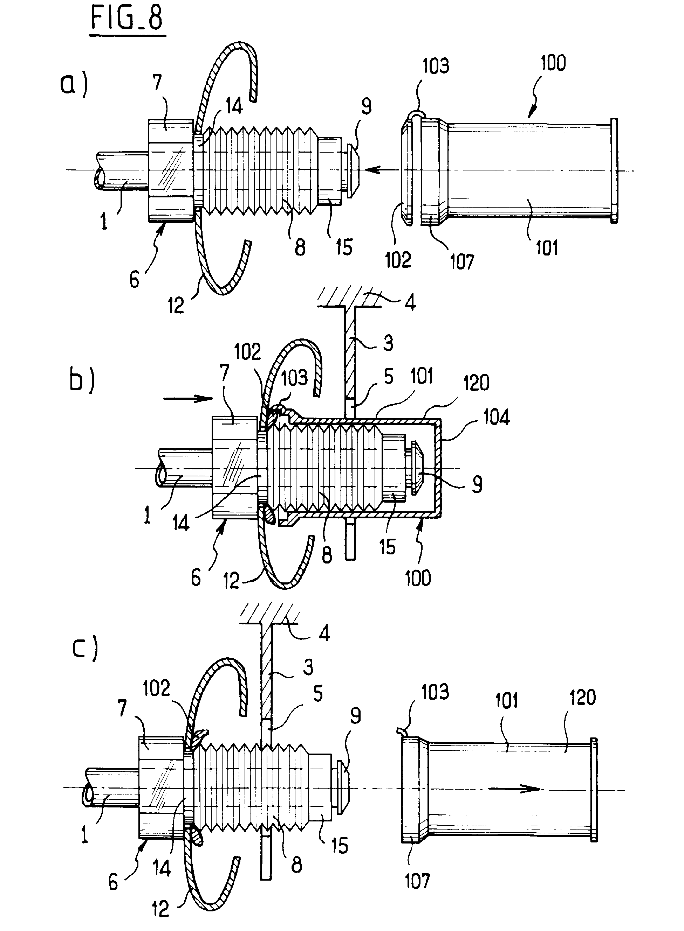

La figure 8 illustre les différentes étapes de mise en place de l'obturateur amovible 100 précité.
En a), l'obturateur amovible 100 est présenté, avec son anneau séparable 102 en avant et disposé coaxialement au corps tubulaire 101, l'axe commun étant noté X. La vis-raccord 6, avec sa partie écrou 7 et sa partie filetée 8, porte déjà le cavalier d'arrêt en translation 12. Ce cavalier est en place sur une partie lisse centrale 14 intermédiaire entre la partie écrou 7 et la partie filetée 8. La vis-raccord 6 présente enfin une extrémité lisse (souvent nommée "bout pilote") qui est notée 15.
En b), l'obturateur amovible 100 a été mis en place sur la vis-raccord 6, c'est-à-dire que le corps tubulaire 101 est enfiché sur la portion filetée 8, tandis que l'anneau séparable 102 a franchi tous les filets de cette portion filetée, pour arriver au niveau de l'espace intermédiaire correspondant à la portion lisse cylindrique 14. L'anneau séparable 2 vient alors au contact du cavalier d'arrêt en translation 12. Cet ensemble peut être enfiché dans l'ouverture 5 de la patte de fixation 3, l'extrémité de préhension 120 (ici tubulaire et s'étendant au-delà de l'éventuelle paroi intermédiaire 105) du corps tubulaire 101 dépassant de ladite patte suffisamment pour permettre à l'opérateur de saisir cette extrémité pour procéder à l'enlèvement de ce corps tubulaire.
En c), l'opérateur a retiré à la main le corps tubulaire 101, et l'anneau séparable 102 reste en place, après rupture du ligament frangible ici unique 103, assurant alors pleinement sa fonction d'organe de retenue pour le cavalier 12. Il suffit alors de procéder au vissage de la vis-raccord 6 sur le raccord femelle 11.

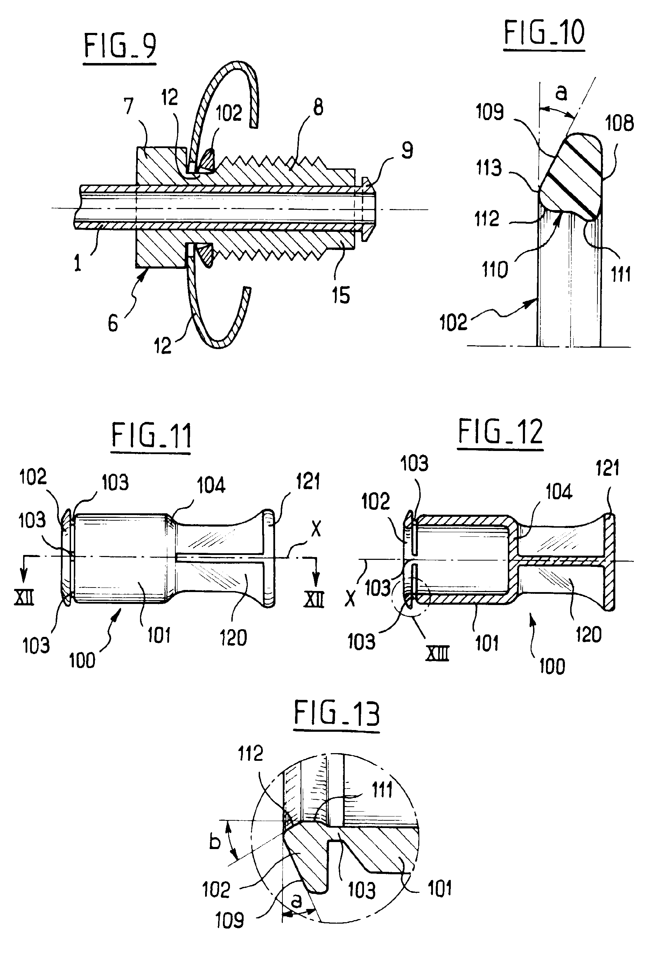

Les figures 9 et 10 permettent de mieux distinguer la géométrie particulière qu'il est avantageux de prévoir pour l'anneau séparable 102.

On constate tout d'abord que l'anneau séparable 102 présente un profil interne à décrochement, avec un diamètre plus faible du côté du corps tubulaire 101. Comme cela est mieux visible sur la figure 10, le profil interne, noté 110, de l'anneau séparable 102 présente en effet une portion 111 du côté du corps tubulaire qui présente un diamètre interne correspondant sensiblement au diamètre de la portion cylindrique 14, tandis que la portion 112 présente un diamètre légèrement plus grand. La portion 112 présente un diamètre permettant juste de glisser sur le bout pilote 15 de la vis-raccord 6 puis de monter sur le premier filet de la portion filetée 8. Le décrochement permet d'avoir un frottement modéré sur les filets de la portion filetée 8, et évite aussi d'avoir des dépôts de matière sur ces filets qui induiraient un risque de pollution pour les canalisations. C'est naturellement le diamètre de la portion 111 qui réalise en fait l'encliquetage de l'anneau 102 par coopération avec le dernier filet de la portion filetée 8. L'effet obtenu d'anti-retour assure le maintien en place du cavalier 12.

On constate également que l'anneau séparable 102 présente une facette extérieure tronconique 109 au-delà du nez avant 113. Ceci permet de limiter le frottement par contact avec le cavalier 12 une fois ledit obturateur mis en place. La facette inclinée 109 de l'anneau séparable 102 pourra former un angle a de 30° environ par rapport au plan de l'anneau 102. Cet angle de dégagement est très intéressant dans la pratique pour éviter un contact plan sur plan entre l'anneau séparable 102 et le cavalier 12, ce qui évite d'induire un mouvement de rotation audit cavalier lors du serrage de la vis-raccord 6, en évitant également une morsure des griffes de bord du cavalier 12 dans la patte de fixation 3.

Sur les figures 11 à 13, on a illustré une autre variante de réalisation de l'obturateur amovible de l'invention, en conservant les mêmes références pour les parties homologues.

On constate tout d'abord que l'anneau séparable 102 est relié au corps tubulaire 101 par une pluralité de ligaments frangibles 103, qui sont répartis sur la circonférence dudit anneau. On a prévu ici quatre tels ligaments frangibles 103. Dans la pratique, le nombre retenu sera deux, trois, ou quatre en fonction de l'effort d'arrachement rencontré.

L'anneau 102 est alors moulé en avant du corps tubulaire. Dans ce cas, pour des raisons de commodité de fabrication, on ne prévoira pas le bourrelet d'étanchéité 106 précité ni les facettes de contact à 120° à l'intérieur du corps tubulaire 101.

Par ailleurs, on constate que le corps tubulaire 101 présente, au-delà de son fond 104, une extrémité de préhension 120 qui n'est plus tubulaire, mais est de section cruciforme se terminant par un disque transversal noté 121. L'accrochage des doigts pour l'enlèvement manuel est ainsi facilité.

On notera enfin le profil légèrement différent de la section transversale de l'anneau (figure 13), profil qui est moins arrondi, et présente, en plus de la facette inclinée 109 (angle a), une facette d'entrée 112 tronconique (angle b d'environ 30°).

L'invention n'est pas limitée au mode de réalisation qui vient d'être décrit, mais englobe au contraire toute variante reprenant, avec des moyens équivalents, les caractéristiques essentielles précitées.

## Revendications

1. Obturateur amovible (100) associé à une vis-raccord (6) passant librement autour d'un embout mâle prévu en extrémité d'une canalisation métallique (1), et destinée à se visser dans un raccord femelle (11) prévu en extrémité d'une canalisation flexible (2) en traversant une patte de fixation (3) solidaire d'une structure de support, avec interposition d'un cavalier d'arrêt en translation (12) entre la partie écrou (7) de la vis-raccord et la patte de fixation, caractérisé en ce qu'il est essentiellement constitué par un corps tubulaire (101) fermé destiné à être monté sur la partie filetée (8) de la vis-raccord (6), et par un anneau séparable (102)relié au corps tubulaire (101) par au moins un ligament frangible (103) au niveau de l'ouverture dudit corps, ledit anneau ayant un diamètre intérieur inférieur au diamètre extérieur de ladite partie filetée afin de constituer un organe de retenue, une fois ledit obturateur mis en place, pour un cavalier d'arrêt en translation (12) enfilé sur la vis-raccord (6), ledit anneau (102) restant en place sur la vis-raccord après enlèvement du corps tubulaire (101) et rupture du ou des ligaments frangibles (103).

2. Obturateur amovible selon la revendication 1, caractérisé en ce que le corps tubulaire (101) et son anneau séparable (102) sont enfichables coaxialement sur la partie filetée (8) de la vis-raccord (6), et le ou les ligaments frangibles de liaison (103) sont conçus pour se rompre sous un effort axial très inférieur à l'effort d'arrachement de l'anneau (102) retenant le cavalier (12) sur ladite vis-raccord.

3. Obturateur amovible selon la revendication 2, caractérisé en ce que le corps tubulaire (101) peut être enlevé à la main, en exerçant un effort axial limité compris entre 10 et 20 newtons, tandis que l'anneau séparable (102) résiste à un effort axial d'arrachement d'au moins 50 newtons.

4. Obturateur amovible selon l'une des revendications 1 à 3, caractérisé en ce que le ligament frangible (103) raccordant l'anneau séparable (102) au corps tubulaire (101) est unique, et ledit corps tubulaire présente, au niveau de son ouverture, un bourrelet d'étanchéité (106) se raccordant à une jupe cylindrique d'extrémité (107) à laquelle est lié ledit ligament.

5. Obturateur amovible selon l'une des revendications 1 à 3, caractérisé en ce que l'anneau séparable (102) est relié au corps tubulaire (101) par une pluralité de ligaments frangibles (103) répartis sur la circonférence dudit anneau, en particulier deux à quatre ligaments frangibles.

6. Obturateur amovible selon l'une des revendications 1 à 5, caractérisé en ce que le corps tubulaire (101) présente une longueur suffisante pour que son extrémité de préhension (120) dépasse largement de la patte de fixation (3) après traversée de celle-ci, de façon à permettre un enfichage de l'obturateur (100) à travers ladite patte de fixation avant l'enlèvement dudit obturateur.

7. Obturateur amovible selon la revendication 6, caractérisé en ce que le corps tubulaire (101) présente, au-delà de son fond (104), une extrémité de préhension (120) de section cruciforme se terminant par un disque transversal (121).

8. Obturateur amovible selon la revendication 6, caractérisé en ce que le corps tubulaire (101) présente une paroi intermédiaire (105) servant de butée d'appui pour l'embout mâle (9) de la canalisation métallique (1), l'extrémité de préhension (120) étant tubulaire et s'étendant au-delà de ladite paroi intermédiaire.

9. Obturateur amovible selon l'une des revendications 1 à 8, caractérisé en ce que l'anneau séparable (102) présente un profil interne (110) à décrochement, avec un diamètre plus faible du côté du corps tubulaire (101).

10. Obturateur amovible selon l'une des revendications 1 à 9, caractérisé en ce que le l'anneau séparable (102) présente une facette extérieure tronconique (109) inclinée vers l'arrière pour limiter le frottement par contact avec le cavalier (12) une fois ledit obturateur mis en place.

11. Obturateur amovible selon la revendication 10, caractérisé en ce que la facette extérieure (109) de l'anneau séparable (102) est inclinée d'un angle de l'ordre de 30° par rapport au plan dudit anneau.

12. Obturateur amovible selon l'une des revendications 1 à 11, caractérisé en ce que le corps tubulaire (101) et son anneau séparable (102) forment un ensemble unitaire moulé.
